# EUROPÄISCHE PATENTANMELDUNG

(11) **EP 0 978 345 A1**
(43) Veröffentlichungstag der Anmeldung: **09.02.2000**
(21) Anmeldenummer: 99113469.3
(22) Anmeldetag: 13.07.1999
(51) Int. Cl.: B23K 26/00, B23K 26/02, B23K 33/00

(54) **Verfahren zum Schneiden von Y-Fasen**

(30) Priorität: 04.08.1998 DE 19835057
(71) Anmelder: Messer Cutting & Welding AG, 64823 Gross-Umstadt (DE)
(72) Erfinder: Neubauer, Norbert, Dr., 90425 Nürnberg (DE); Heine, Peter, 63477 Maintal (DE)
(74) Vertreter: Berdux, Klaus, Dipl.-Ing.

(57) **Zusammenfassung**

Das Verfahren zur Herstellung von Bauteilen (2) mit einer abgeschrägten Schnittkante (Y-Fase) ist dadurch gekennzeichnet, daß mit einem senkrechten Laserstrahl (5) mindestens ein senkrechter Schnitt durch das Material (1) ausgeführt, Teile (3) des Materials (1) außer dem Bauteil (2) werden entfernt und nachfolgend mit einem schrägen Laserstrahl (6) ein schräger Schnitt entlang der erzeugten, senkrechten Schnittkante vorgenommen wird.

## Beschreibung

Die Erfindung betrifft ein Verfahren zum Schneiden von Y-Fasen mittels Laser.

Das Anfasen von Blechkanten, etwa im Schiff- oder Anlagenbau, ist für einen nachfolgenden Schweißprozeß häufig unverzichtbar. Das Anfasen von Blechkanten mittels Laserschrägschnitt am isolierten Bauteil wird beschrieben in: Laser 5, 1997, S. 6-10. Bei einem solchen Verfahren muß zuerst ein senkrechter Schnitt mit dem Laser durchgeführt und dann der obere Teil der Schnittfläche mit einem Schrägschnitt entfernt werden. Dieses Verfahren hat den Nachteil, daß das Restblech vom Schneidetisch weggenommen werden muß, um genügend Platz für den Austrieb der Schlacke beim Schrägschnitt zu schaffen. Andernfalls besteht die Gefahr des Verschweißens von Gutteil und Restblech. Bei der Entnahme des Restblechs ist ein Handhabungsvorgang erforderlich. Dieser ist mit dem Nachteil verbunden, daß das Bauteil (Gutteil) seine Lage verändern kann.

Schnitte in der umgekehrten Reihenfolge (erst schräg dann senkrecht) führen zu keinem befriedigendem Ergebnis. Der schräge Schnittspalt verhindert einen sauberen senkrechten Schnitt, da die Schlacke nicht sauber nach unten ausgetrieben werden kann.

Der Erfindung liegt die Aufgabe zugrunde, ein Verfahren ohne die genannten Nachteile bereitzustellen.

Gelöst wurde die Aufgabe durch ein Verfahren mit den Merkmalen von Anspruch 1.

Ein geeignetes Laserschneidegerät zur Durchführung des erfindungsgemäßen Verfahrens ist beispielsweise ein Laserschneidgerät mit Laser-Drehkopf, das unter der Bezeichnung LaserMat® von der Firma Messer Cutting & Welding bezogen werden kann. Das Laserschneidgerät ist in dem Prospekt Nr. 0.815.090 Ausgabe 9207/III dd, Messer Griesheim Schweißtechnik GmbH + Co. 1998, zur Maschine LaserMat®, erhältlich bei Messer Griesheim Schweißtechnik GmbH + Co., Geschäftsbereich Schneidsysteme, Otto-Hahn-Str. 2-4, D-64823 Groß-Umstadt, beschrieben, worauf hiermit Bezug genommen wird.

Ein geeignetes Laserschneidegerät wird auch beschrieben in: Laser 5, 1997, S. 6-10, worauf hiermit Bezug genommen wird.

Das Verfahren dient vorzugsweise zur Herstellung von flachen Bauteilen aus vorzugsweise flachen Materialien wie Metallblechen.

Bearbeitete Metallbleche haben in der Regel eine Dicke im Bereich von 1 bis 50 mm, vorzugsweise im Bereich von 5 bis 20 mm. Die Metallbleche bestehen beispielsweise aus Stahl, Baustahl oder Schiffsbaustahl, Edelstahl oder Aluminium.

Die mit dem Laserschneidgerät erzeugten senkrechten Schnitte haben im allgemeinen eine Spaltbreite im Bereich von 0,1 bis 1 mm, vorzugsweise um 0,5 mm.

Die Kontur des Bauteils/der Bauteile wird mit einem senkrecht zur Blechoberfläche stehenden Laserbearbeitungskopf ausgeschnitten. Das Restblech wird dann entnommen. Um zu vermeiden, daß ein Verrutschen der Bauteile bei der Restblechentnahme eine Ungenauigkeit verursacht, wird die Position mit einem System zur Bauteillagenerkennung überprüft. Eine festgestellte Veränderung der Bauteilposition (Drehung und Verschiebung) wird der Steuerung mitgeteilt. Beim nachfolgenden Schrägschnitt mit dem Laser wird der gemessene Bauteilversatz berücksichtigt.

Eine geeignete Einrichtung zur Lageerkennung des Bauteiles arbeitet z. B. mit einem Lichtschnittsensor, beschrieben in: 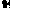 Heckel, W.; Optische 3D-Konturerfassung und on-line Biegewinkelmessung mit dem Lichtschnittverfahren, Reihe Fertigungstechnik Erlangen, Band 43, Bamberg-Meisenbach 1995", worauf hiermit Bezug genommen wird.

Zur Erzeugung einer größeren Spaltbreite mit senkrechtem Schnitt, z. B. im Bereich von 1 bis 6 mm, vorzugsweise 2 bis 4 mm, können mehrere Laserschnitte nacheinander ausgeführt werden. Diese größere Spaltbreite ist breit genug, damit in einem weiteren Schritt (schräger Schnitt) die Y-Fase erzeugt werden kann. In diesem Fall ist die Entfernung von restlichem Material und eine Lageerkennung des Bauteiles nicht erforderlich.

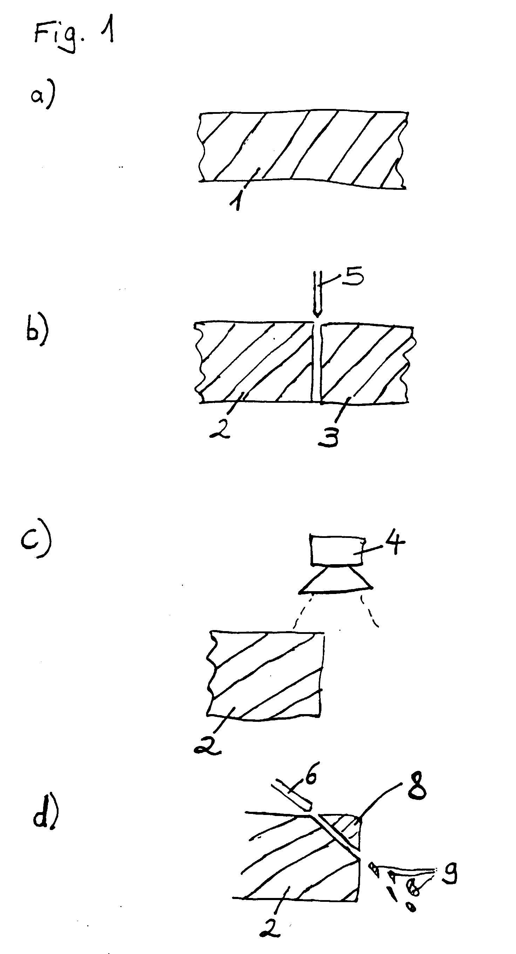

Anhand von Fig. 1 wird das erfindungsgemäße Verfahren am Beispiel von einem Stahlblech als flachem Material erläutert.

Fig. 1 a) bis d) zeigt schematisch die Verfahrensstufen des Laserschnittes mit Restmaterialentfernung (Verfahren Laser-Entnahme-Bauteillagenerkennung-Laser).

Fig. 1 a) zeigt das unbearbeitete Blech 1. Fig. 1 b) zeigt das Blech 1 nach Ausführung eines senkrechten Schnittes mit Laserstrahl 5, z. B. 0,5 mm Breite. Man erkennt die erzeugten Teile Bauteil 2 und Restblech 3. Restblech 3 wird entfernt. Im nächsten Schritt, Fig. 1 c), wird die Lage des Bauteiles 2 mit der Einrichtung zur Lageerkennung 4 erfaßt. Die Lage des Bauteiles 2 wird der Steuereinheit für den Laser zugeführt. Darauf erfolgt der schräge Schnitt mit Laserstrahl 6 bei schräg gestelltem Laserkopf (Fig. 1 d), wobei das Bauteil 2 mit fertiger Schnittkante (Y-Fase), Abfallstück 8 und Schlacke 9 gebildet werden.

### Bezugszeichenliste

- 1: unbearbeitetes flaches Material (z. B. Blech)
- 2: Bauteil
- 3: Restmaterial (z. B. Restblech)
- 4: Einrichtung zur Lageerkennung des Bauteiles
- 5: senkrechter Laserstrahl
- 6: schräger Laserstrahl
- 8: Abfallstück
- 9: Schlacke

## Patentansprüche

1. Verfahren zur Herstellung von Bauteilen mit einer abgeschrägten Schnittkante (Y-Fase), dadurch gekennzeichnet, daß mit einem senkrechten Laserstrahl (5) mindestens ein senkrechter Schnitt durch das Material (1) ausgeführt wird, Teile (3) des Materials (1) außer dem flachen Bauteil (2) entfernt werden und nachfolgend mit einem schrägen Laserstrahl (6) ein schräger Schnitt entlang der erzeugten, senkrechten Schnittkante am Bauteil vorgenommen wird und nach Erzeugung der senkrechten Schnittkante mittels einer Einrichtung zur Lageerkennung (4) die Lage des entstandenen Bauteiles erfaßt und die gewonnene Information an ein Steuergerät geleitet wird.

2. Verfahren nach Anspruch 1, dadurch gekennzeichnet, daß Einrichtung zur Lageerkennung (4) nach dem Lichtschnittverfahren arbeitet.

3. Verfahren nach Anspruch 1 oder 2, dadurch gekennzeichnet, daß Metallbleche mit einer Dicke im Bereich von 1 bis 50 mm als Material (1) verwendet werden.

4. Verfahren nach einem der Ansprüche 1 bis 3, dadurch gekennzeichnet, daß der Laserstrahl einen Schnitt mit einer Schnittbreite im Bereich von 0,1 bis 1 mm erzeugt.

5. Verfahren zur Herstellung von Bauteilen mit einer abgeschrägten Schnittkante (Y-Fase), dadurch gekennzeichnet, daß mit einem senkrechten Laserstrahl (5) mehr als ein senkrechter Schnitt durch das Material (1) ausgeführt wird, so daß ein Spalt mit einer Breite von mindestens 1 mm gebildet wird, und nachfolgend mit einem schrägen Laserstrahl (6) ein schräger Schnitt entlang der erzeugten, senkrechten Schnittkante am Bauteil vorgenommen wird.

6. Verwendung einer Einrichtung zur Lageerkennung (4) zur Herstellung von Bauteilen mit einer abgeschrägten Schnittkante (Y-Fase).

7. Verwendung nach Anspruch 6, dadurch gekennzeichnet, daß die Einrichtung zur Lageerkennung (4) nach dem Lichtschnittverfahren arbeitet.
